# EUROPÄISCHE PATENTSCHRIFT

(11) **EP 2 106 996 B1**
(45) Veröffentlichungstag und Bekanntmachung des Hinweises auf die Patenterteilung: **16.05.2012**
(21) Anmeldenummer: 08006527.9
(22) Anmeldetag: 31.03.2008
(51) Int. Cl.: B63B 25/22, B65D 19/08, B65G 1/00, E06B 9/88

(54) **Palettenlageranlage zur Lagerhaltung von Lagergütern**
Pallet storage facility for storing storage goods
Installation de stockage de palettes destinée à l'entreposage de marchandises de stockage

(43) Veröffentlichungstag der Anmeldung: 07.10.2009
(73) Patentinhaber: becker marine systems GmbH & Co. KG, 21079 Hamburg (DE)
(72) Erfinder: Schauland, Joerg, D-21423 Winsen (Luhe) (DE); Boettger, Frank, D-23558 Luebeck (DE)
(74) Vertreter: Richter Werdermann Gerbaulet Hofmann

(56) Entgegenhaltungen:
- EP-A- 0 235 488
- DE-A1- 2 152 846
- DE-C1- 10 203 145
- DE-U1- 20 216 420
- US-A- 3 386 600
- US-A- 4 199 069
- US-A- 4 863 024
- US-A1- 2002 182 035
- US-A1- 2003 123 965

## Beschreibung

Die Erfindung betrifft eine Palettenlageranlage nach dem Oberbegriff des Anspruches 1.

Eine Palettenlageranlage dieser Art ist aus der EP 1 406 051 bekannt. Zur Lagerhaltung verschiedener Güter in Schiffen sind Trennwände vorhanden, um verschiedene Lagerräume zu bilden. Die Trennwände bestehen aus Edelstahl oder aus mit aluminiumbeschichteten Paneelen und sind im Lagerraum befestigt. In den getrennten Lagerräumen werden handelsübliche Paletten verwendet.

In der DE 21 31 086 A ist eine Vorrichtung für Schiffe zum Umsetzen einer von einer ersten Transportpalette getragenen Last auf eine leere zweite Palette gezeigt und beschrieben. Für den innerbetrieblichen Transport werden hochwertige Paletten aus hygienischem Material verwendet. Außerhalb des Schiffes werden dagegen Paletten aus Holz benutzt. Die Ladung wird dann durch die Vorrichtung auf die Edelstahlpaletten umgeladen. Die Ladung kann sich jedoch während des Umladens verschieben oder herunterfallen.

Durch die US-A-3,386,600 ist bekannt, Lagergut für ein Schiff mit Kränen oder einem Hubschrauber zu verteilen.

In der US 2003/0123965 A1 wird ein Transportsystem und insbesondere Transportboxen bzw. Transportcontainer welche versiegelbar und stapelbar während des Transports verwendet werden können, beschrieben.

Aus der US 4,199,069 sind Paletten bzw. Boxen bekannt, welches aus gitterartigen Seitenwänden bestehen. Sowie derart konstruiert sind, dass sie auf einfache Art und Weise durch geringen Aufwand auf- bzw. abgebaut werden können, sowie dass die einzelnen Teile der Palette bzw. Box im abgebauten Zustand möglichst wenig Platz benötigen.

In der DE 202 16 420 U1 wird eine Palettenlageranlagen zur Lagerhaltung von Lagergütern unter verschiedenen klimatischen Bedingungen, insbesondere für den Einsatz in einem Wasserfahrzeug beschrieben.

Der Erfindung liegt die Aufgabe zugrunde, eine Lösung zu finden, mit der die logistische Verteilung bzgl. Proviant bzw. Ersatzteile, Hotelbedarf usw. für ein Kreuzfahrtschiff, verbessert wird.

Diese Aufgabe wird durch eine Palettenlageranlage mit den kennzeichnenden Merkmalen des Anspruches 1 in Verbindung mit seinen Oberbegriffsmerkmalen gelöst.

Hiernach besteht die Erfindung darin, dass jede Palette boxenartig mit einer Trägerplatte und mit Seitenwänden ausgebildet ist, wobei die Trägerplatte mit in den Trägerplatteneckbereichen angeordneten Standfüßen versehen ist.

Die an den schiffsinternen Paletten befestigten Seitenwände verhindern, dass die Ladungen auf den Paletten Verrutschen und Herunterfallen können. Die an den Trägerplatten der Paletten angeordneten Standfüße verhindern beim Verfahren der Paletten vermittels bevorzugterweise schienengebundener Transporteinrichtung innerhalb der Palettenlageranlage oder von einem Laderaum zu einem anderen Laderaum ein Abkippen der Paletten mit der gesamten Ladung. Sind die Seitenwände der Palette bzw. die Seitenwände der Gitterbox gitterförmig ausgebildet und somit luftdurchlässig, besteht die Möglichkeit, bei einer entsprechenden Klimatisierung der Laderäume eine Haltbarkeit des Ladegutes über einen längeren Zeitraum zu erreichen.

Während bei der Lösung nach der EP 1 406 051 sich die Ladung an den festen Wänden an dem Lagerraum abstützt, und daher die Paletten bei dieser Lösung eine feste, geordnete Position haben muss, um ein Herunterfallen der Ladung zu verhindern, ist es durch die als Stützwände wirkenden Seitenwände der Paletten nach der Erfindung möglich, die Palette beliebig anzuordnen, da sich die Ladung oder der Proviant an den Wänden der Palette abstützen kann und so gesichert ist.

Hintereinander oder nebeneinander angeordnete Paletten bilden zusammen eine Seitenwand, so dass diese Wände die festen Seitenwände des Laderaumes ersetzen können, bzw. Trennwände des Laderaumes bilden, wobei die Anordnung von Gitterwänden an den Trägerplatten der Paletten eine Klimatisierung der Laderäume, in denen die Paletten bzw. Gitterboxen mit ihren Ladungen gelagert sind, ermöglicht, so dass das Lagergut bei den jeweils erforderlichen Temperaturen gelagert werden kann.

Des Weiteren sind die Seitenwände der Paletten als Gitterwände ausgeführt. Dadurch entsteht eine Gitterbox. Dies hat den Vorteil, dass die Ladung einerseits sicher befestigt ist, da die Gitterkonstruktion hierfür optimal ist, weil sich Kartons gut an dem Gitter abstützen können, andererseits kann die Ladung leicht eingesehen werden, um die Kartons mit Proviant oder ähnliches leicht identifizieren zu können. Die so geschaffene Konstruktion ergibt eine Gitterbox, die außerdem ein geringes Gewicht aufweist. Auf der Grundkonstruktion befinden sich die Gitterwände. Die Wände sind fest mit der Grundkonstruktion verbunden. Es sind aber auch loslösbare oder klappbare Wände denkbar.

Danach sieht die Erfindung vor, dass zur Ausbildung der Gitterbox die Seitenwände der Palette als Gitterwände ausgeführt sind, die an der Trägerplatte fest oder lösbar angeordnet sind.

Die an der Trägerplatte angeordnete Anzahl der Gitterwände kann beliebig sein. Alternativ ist es auch möglich, wenn die Gitterbox zwei oder drei Seitenwände aufweist. Durch die fehlende bzw. die fehlenden Seitenwände kann die Ladung ebenfalls ein- und ausgeladen werden. Eine andere Lösung ist es, wenn ein oder mehrere Seitenwände loslösbar mit der Trägerplatte verbunden sind. Die abnehmbare Seitenwand bzw. Seitenwände schaffen ebenfalls eine Lade- bzw. Entladeseite. Sind eine Seitenwand oder mehrere Seitenwände türartig ausgebildet, so kann die Ladung ein- und ausgeladen werden, wobei die geschlossene Gitterbox die Ladung optional sichert.

Jede Trägerplatte jeweils mit vier Standfüßen versehen ist, die zur Sicherung der Paletten oder der Gitterboxen gegen seitliches Abkippen so angeordnet ist, dass sie Laufschienen der Transporteinrichtung seitlich übergreifen, wobei ein Transportwagen zwischen den Laufschienen angeordnet ist, die bevorzugterweise ein L-förmiges Profil aufweisen.

Des Weiteren ist ein Palettenwechsler in der Palettenlageranlage vorhanden ist, der die Ladung, die sich auf externe Paletten befindet, auf interne Schiffspaletten umlädt. Hierbei wird insbesondere jede Trägerplatte aus einem hygienischen Trägermaterial, wie Edelstahl oder einem geeignetem Kunststoff, ausgeführt, wobei die Palettenlageranlage vorzugsweise mit einem Palettenwechsler ausgestattet ist, um ankommende Ladung auf Holzpaletten in die mit dem hygienischem Trägermaterial versehenem Trägerplatten umzuladen. Proviant wird nämlich überwiegend in Holzpaletten ausgeliefert. Mit einem Palettenwechsel bekannter Weise kann die Ladung von den Holzpaletten auf Edelstahlpaletten umgeladen werden. Dieser Vorgang kann automatisch oder teilautomatisch erfolgen. Dieser Vorgang kann auch in ein automatisiertes Lager im Schiff integriert werden oder unabhängig davon durchgeführt werden. Vorzugsweise soll die Umladung durch Schieben der Ladung auf eine Edelstahlunterlage erfolgen.

Vorteilhafte Ausgestaltungen der Erfindung sind in den Unteransprüchen gekennzeichnet.

Vorteilhafterweise können 2, 3 oder 4 Gitterwände vorhanden sein.

Die obenseitig offen ausgebildete Gitterbox ist mittels eines Deckelteils verschließbar, das vollwandig oder als Gitterwand ausgebildet ist und das lösbar mit den Seitenwänden oder den Gitterwänden verbunden ist, so dass das Be- und Entladen der Gitterbox auch von oben erfolgen kann. Vorteilhafterweise sind die Seitenwände und/oder die Gitterwände fest oder lösbar miteinander verbunden, so dass bei abgenommenen Seitenwänden auch das Stapeln des Ladegutes direkt auf der Trägerplatte möglich ist.

Eine weitere Ausführungsform sieht vor, dass zwischen den Seitenwänden oder den Gitterwänden Querstrebungen oder Regalböden oder vollflächige oder gitterförmige Regalböden zur Ausbildung von Regalen mit einem Fach oder mehreren Fächern angeordnet sind. Der dadurch erreichte, besondere Vorteil besteht darin, dass durch die zwischen den Seitenwänden angeordneten Querverstrebungen die Steifigkeit der Konstruktion erhöht wird. Die Verstrebungen der Wände sind vorzugsweise waagerecht angeordnet, wobei insbesondere Regale als Querverstrebungen vorhanden sind, so dass Böden oder Kästen ähnlich wie bei einem Regal eingehängt werden können. Die Gitterbox kann auch ähnlich einem Schrank oder einer Kommode ausgeführt sein.

Eine weitere vorteilhafte Ausgestaltung der Erfindung besteht darin, dass die Transporteinrichtung aus einem von Hand oder motorisch verfahrbaren Transportwagen oder aus einem in dem Lagergang der Palettenlageranlage verfahrbaren Längstransportwagen und einem in die Lagerreihen verfahrbaren Quertransportwagen besteht.

Eine weitere vorteilhafte Weiterbildung der Erfindung besteht darin, dass die Trägerplatten mit vier Standfüßen anstelle von Kufen versehen sind. Der Raum unter der Grundkonstruktion und zwischen den Standfüßen kann für den automatischen Transport genutzt werden. Dadurch kann die Raumhöhe besser genutzt werden. Ein automatisches Transportfahrzeug bewegt die Gitterbox, wobei diese die Gitterbox anhebt und in einen Gang einfährt, der durch eine Laufschiene oder ähnliches begrenzt wird. Die Standfüße hängen dabei außerhalb der Laufschiene. Die Laufschiene dient als Fahrschiene für den Transportwagen und gleichzeitig als Führung und Ladungssicherung für die Transporteinheit. Die Laufschienen sind eine Leiteinrichtung für die Transportwagen bzw. Flurförderer und dienen als Sicherung für den Ladungsträger bzw. für die Gitterbox zugleich. Die Laufschiene kann als L-, U- oder als Hutprofil ausgebildet sein, die die Kombination einer Fahrschiene und einer Ladungssicherung übernimmt. Die Laufschiene lässt sich zur Montage justieren, was idealerweise auch noch für Nachstellarbeiten genutzt werden kann. Die Laufschiene hält gleichzeitig die Palette, wenn das Transportfahrzeug die Palette abgesetzt hat. Die Gitterbox kann dabei mit der Trägerplatte und/oder den Standfüßen auf der Laufschiene aufliegen. Ferner kann die Laufschiene mit Stoppelementen oder Positionselementen versehen sein, die sich auf der Laufschiene oder an einer Seite befinden. Diese Elemente befinden sich dann zwischen den Paletten, so dass die abgesenkten Gitterboxen nicht verrutschen können. Die Positionselemente können keilförmig oder konisch geformt sein, derart dass die Gitterbox in eine Idealposition gleiten kann. Durch die Unterteilung in Lager- und Bearbeitungs- bzw. Hantierungsbereiche können unterschiedliche Regeln für diese Bereiche ausgenutzt werden. Diese Form der Lagerhaltung entspricht den gängigen Hygienevorschriften. Die Länge der Standfüße ist dabei so bemessen, dass einerseits die Paletten von Gabelstaplern oder anderweitigen Hubfahrzeugen ergriffen werden können und andererseits die Laufschienen seitlich umgriffen werden können, so dass Laufschienen und die Gitterboxen stabile Einheiten bilden.

Die Fördereinrichtung für die Paletten der Palettenlageranlage kann zum Beispiel auch als Rollen- oder Kettenförderer ausgeführt sein. Die Laufschienen für die Transportwagen sind auf dem Boden montiert und insbesondere so angeordnet, dass sie begehbar bzw. mit Flurförderfahrzeugen befahrbar sind. Dies wird hauptsächlich durch einen ausreichenden Abstand zwischen den Laufschienen gewährleistet. Vorzugsweise ist die Anlage so ausgeführt, dass eine Palettenbewegung auch ohne die automatische Fördertechnik möglich ist. Des Weiteren ist die Ausführung so, dass Transportwagen und die übrige Fördertechnik auch ohne eine zentrale Steuerung bedient werden kann. Dieses ist vorteilhaft, damit bei Ausfall der Steuerung das Lager weiterhin bedient werden kann. Die Anlage kann auch so ausgeführt sein, dass das Lager manuell mit oder ohne Flurförderfahrzeuge bedienbar ist.

Eine weitere bevorzugte Weiterbildung der Erfindung besteht darin, dass ein automatisches System zur Erstellung einer Palettenpackliste mit einem Palettenerfassungssystem zur Detektion der Paletten und einem Informationsverarbeitungssystem zur Erstellung der Palettenpackliste vorhanden ist.

Der Proviant bzw. Ersatzteile, Hotelbedarf und alle weiteren Produkte, die an ein Schiff und besonders ein Kreuzfahrtschiff angeliefert werden, sind nämlich in der Regel mit einer Palettenpackliste ausgestattet. Diese Liste wird zur Kontrolle der Packgüter verwendet.

Möglich ist auch eine elektronische Liste, die wird aber nicht auf die einzelne Palette bezogen sondern auf die gesamte Lieferung. In der Regel wird die gesamte Ladung ohne ein automatisches System um- bzw. ausgepackt, so dass eine "Palettenpackliste" nicht von Bedeutung ist. Bei dem automatischen System der erfindungsgemäßen Anlage dagegen, bei dem die Palette komplett umgeladen wird, ist diese Information aber sehr wichtig. Die Information über die Palettenpackliste wird daher elektronisch an das Schiffssystem geliefert und verarbeitet.

Günstig ist es, wenn die Paletten mit einem Informationsträgermittel ausgestattet sind und das Informationsträgermittel ein RFID-Tag, ein Bar-Code oder ein Chip ist.

Dadurch ist es möglich, dass die Liste mit der Palette geliefert wird und mit dem RFID oder einer ähnlichen Technik direkt bei der Ankunft auf dem Schiff, beim Palettenwechsler oder in der Eingabestation übermittelt wird. Weiterhin ist es möglich, dass die Information im Vorwege übermittelt wird und nur die Zuordnung von der Palettennummer und der Palettenliste vorgenommen wird. Das kann elektronisch durch einen Barcode, ein Chip oder einer anderen Technik erfolgen.

Ausführungsbeispiele werden anhand der Zeichnungen näher erläutert, wobei weitere vorteilhafte Weiterbildungen der Erfindung und Vorteile derselben beschrieben sind.

Es zeigen:
- Fig. 1: eine perspektivische Darstellung einer Ausführungsform einer Palette, mit zwei gitterförmigen Seitenwänden und Deckelteil als obere Abdeckung,
- Fig. 2: eine schematische Darstellung eines Bereiches einer Palettenlageranlage,
- Fig. 3: eine perspektivische Darstellung einer Ausführungsform einer als Gitterbox ausgebildeten Palette,
- Fig. 4: eine Darstellung einer aus einem Transportwagen mit aufgesetzter Gitterbox bestehende Transporteinheit in einer Ansicht von vorn,
- Fig. 5: eine weitere Ausführungsform einer Palette mit die beiden Seitenwände verbindenden Querverstrebungen bzw. mit Regalen,
- Fig. 6: eine Prinzipdarstellung eines Umladevorganges einer Ladung von einer Holzpalette auf eine Edelstahlpalette bzw. auf eine Gitterbox,
- Fig. 7: eine Darstellung eines Systems zur Erstellung einer Palettenliste,
- Fig. 8: eine perspektivische Ansicht einer Palettenlageranlage,
- Fig. 9: eine Aufsicht auf einen Teil einer Palettenlageranlage und
- Fig. 10: eine Vorderansicht der Palettenlageranlage der Fig. 2, gesehen aus der Richtung III-III.

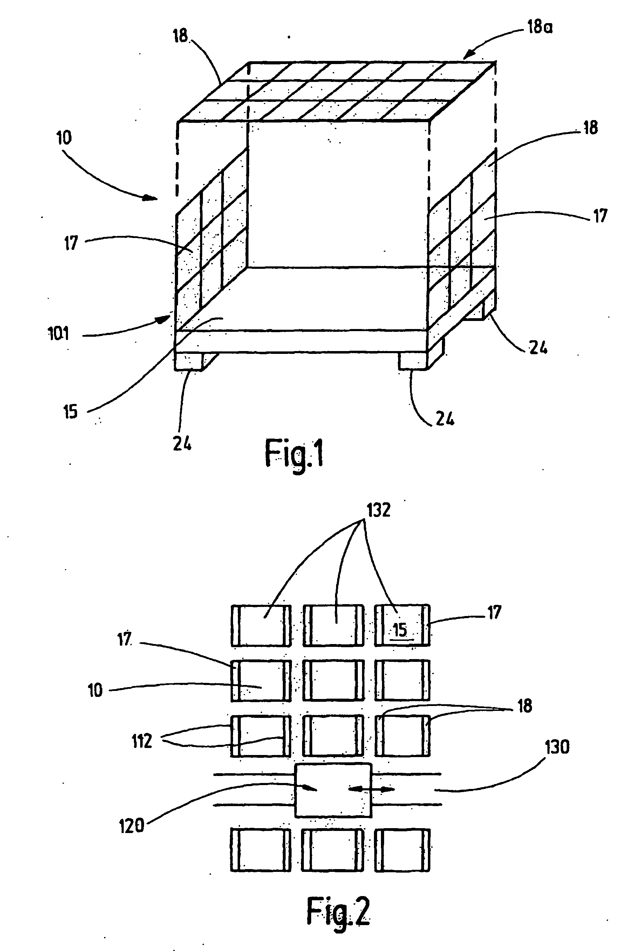

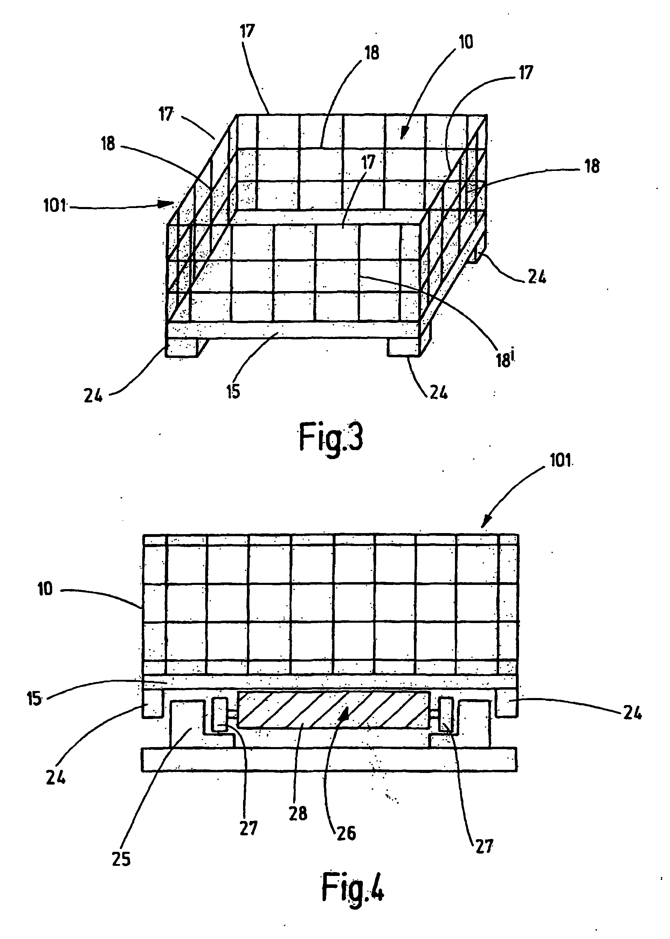

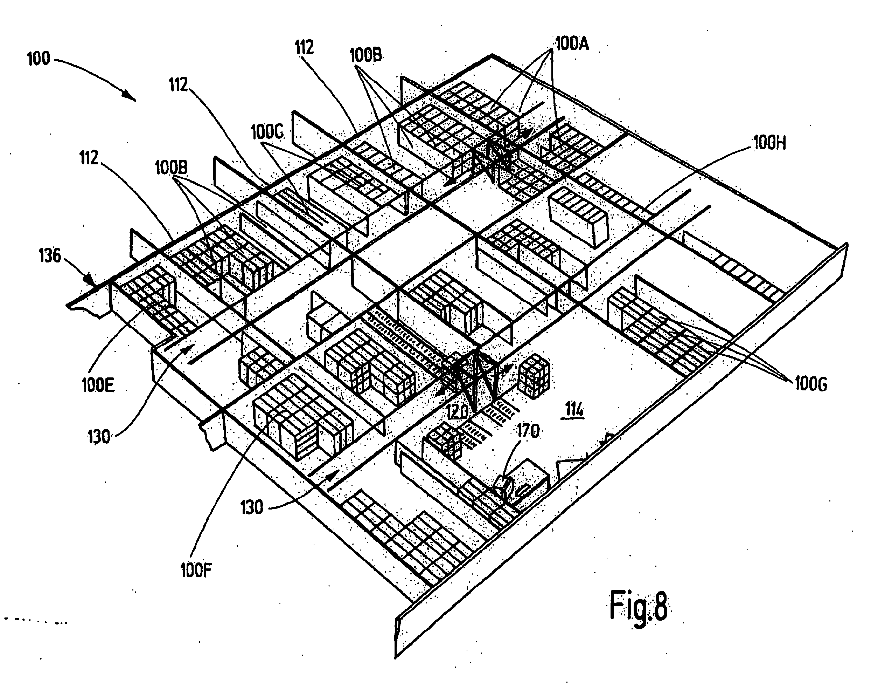

Fig. 1 zeigt eine Palette 101 einer Palettenlageranlage 100, die in Fig. 2 zum Teil gezeigt ist. Die Anlage 100 dient zur Lagerhaltung von Lagergütern für den Einsatz in einem Schiff. Beiderseits eines Lagerganges 130 sind Lagerreihen 132 angeordnet, wie in Fig. 2 veranschaulicht ist. Weiterhin ist eine in dem Lagergang 130 verfahrbare Transporteinrichtung 120 vorhanden, die mit einem in dem Lagergang 130 verfahrbaren Längstransportwagen 122 und mit einem in die Lagerreihe 132 verfahrbaren Quertransportwagen 124 versehen ist. Ein andersartig ausgebildeter Transportwagen 26 als Transporteinrichtung 120 ist in Fig. 4 gezeigt. Dieser dient zum Ein- und Auslagern von Paletteneinheiten mit einer Trägerplatte 15 in die Lagerreihen 132 (Fig. 8, 9 und 10).

Beiderseits des Lagerganges 130 sind mehrere durch feststehende Wände 112 getrennte Lagerräume vorhanden. Diese Wände 112 bilden im Wesentlichen die die Laderäume des Schiffes voneinander trennenden Schotts mit verschließbaren Türen als Sicherheitsvorkehrungen gegen Feuer und Wassereinbruch.

Die einzelnen Paletten 101 bestehen aus den Trägerplatten 15, an denen Seitenwände 17 befestigt sind. Diese Seitenwände 17 bilden bei aneinander gereihten Paletten 101 Trennwände einer Lagerreihe 132, so dass zusätzliche feste Wände bzw. Trennwände im Schiff entfallen. Auf diese einfache Weise ist die Ladung gesichert, wenn die Paletten 101 in den Lagerreihen 132 angeordnet sind. Aber auch während des Transports in die Lagerreihen 132 ist die Ladung vor Herausfallen gesichert, da die Paletten 101 ohne zusätzliche Sicherungsmittel die Ladung sichern. In Fig. 2 sind die einzelnen Paletten 101 beabstandet gezeigt, jedoch nur damit man sie besser voneinander unterscheiden kann. Ansonsten sind die Paletten 101 in Längsreihe hintereinander angeordnet. Im Schiff sind sie relativ dicht zueinander angeordnet, so dass sich die einzelnen Seitenwände 17 zum Beispiel bei starkem Seegang gegenseitig abstützen können. Zur Abteilung der Laderäume des Schiffes in einzelne Lagerräume vermittels der Seitenwände 17 aufweisenden Paletten 101 sind die Seitenwände 17 vollwandig ausgebildet, wobei jede Trägerplatte zwei, drei oder vier Seitenwände 17 aufweisen kann.

Wie Fig. 1 zeigt, sind die Seitenwände 17 der Palette 101 als Gitterwände 18 ausgeführt. In diesem Beispiel sind zwei gegenüberliegende Gitterwände 18 vorhanden, die, wie Fig. 2 zeigt, so in die Lagerreihe 132 eingefahren werden, dass sie entlang der Lagerreihen 132 angeordnet sind. Die Gitterwände 18 sind fest oder lösbar mit der Trägerplatte 15 verbunden. An beiden offenen Seiten kann die Ladung ein oder ausgeladen werden. Alternativ können drei Gitterwände 18 an der Trägerplatte 15 vorgesehen sein. Die Trägerplatte 15 mit den Gitterwänden 18 ergänzt sich zu der Gitterbox 10. Anstelle von Gitterwänden 18 kann die Trägerplatte 15 auch mit Seitenwänden 17 versehen sein, die mit Durchbrechungen versehen sind, die schlitzartig ausgebildet sind oder auch eine andere geometrische Form aufweisen. Wesentlich ist jedoch, dass die Seitenwände 17 wie die Gitterwände 18 luftdurchlässig ausgebildet sind, um in klimatisierten Lagerräumen Kaltluft dem Ladegut nicht nur einer Gitterbox zuführen zu können, sondern um den gesamten Lagerraum mit der jeweils erforderlichen Temperatur klimatisieren zu können.

Wie Fig. 3 zeigt, können auch vier Gitterwände 18 vorgesehen sein, von denen drei Gitterwände fest mit der Trägerplatte 15 verbunden sind, während die vierte Gitterwand 18' oder auch die Trägerplatte 15 entweder türartig oder loslösbar ausgebildet ist, damit die Ladung zugänglich ist. Auch mehrere Türen bzw. loslösbare Gitterwände 18 können vorhanden sein, wobei die Türen in den Seitenwänden 17 oder den Gitterwänden 18 angeordnet sein können.

Jede Trägerplatte 15 ist außerdem mit vier Standfüßen 24 an der Unterseite bzw. an den Ecken der Trägerplatte 15 versehen (Fig. 3). Zwischen den Standfüßen 24 sind Laufschienen 25 angeordnet, auf denen ein die Transporteinrichtung 120 bildender Transportwagen 26 fahrbar angeordnet ist. Die Standfüße 24 verhindern ein seitliches Abkippen der Palette 10. Der Transportwagen 26 ist mit Laufrollen 27 ausgestattet, die auf den Laufschienen 25 aufliegen. Die Trägerplatte 15 liegt auf einem flachen Tragkörper 28 auf, so dass die Trägerplatte 15 von den Laufschienen 25 beabstandet ist. Die Standfüße 24 wirken mit den Laufschienen 25 zusammen und dienen als Führungen für die Palette 10. Die Laufrollen 27 sind ebenfalls auf und durch die Laufschienen 25 geführt. Dies wird durch eine L-Form der Laufschienen 25 erreicht. Denkbar sind aber auch U- oder hutförmige Laufschienenprofile. Wesentlich ist, dass die Standfüße 24 die Laufschienen 25 seitlich übergreifen.

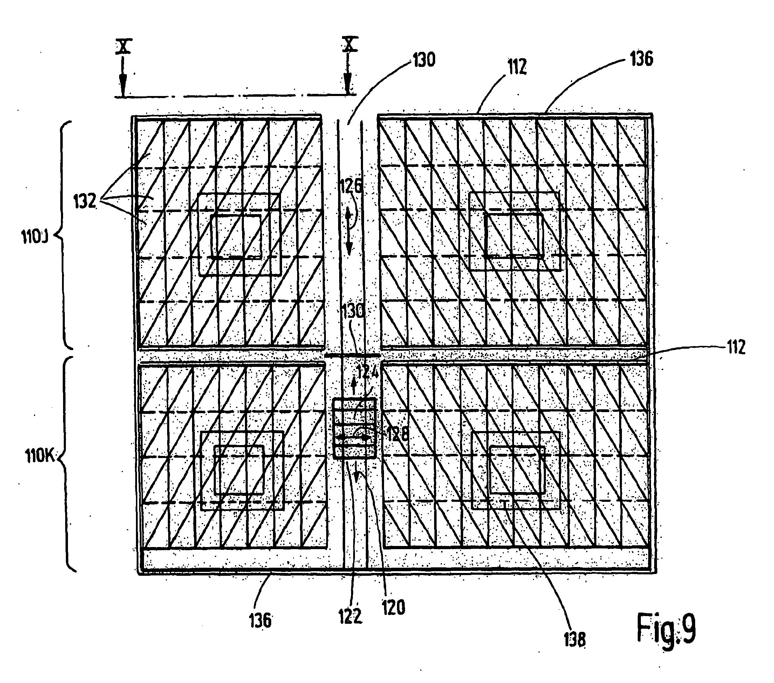

Der Transportwagen 26 gemäß Fig. 2, ist entlang des Lagergangs 130 fahrbar und kann die einzelnen Reihen 12 erreichen. Eine weitere Ausgestaltung besteht darin, dass die Transporteinrichtung 120 nicht nur aus einem Transportwagen 26 gemäß Fig. 4, sondern aus einem Längstransportwagen 122 und einem mit diesem funktional zusammenwirkenden Quertransportwagen 124 besteht (Fig. 9).

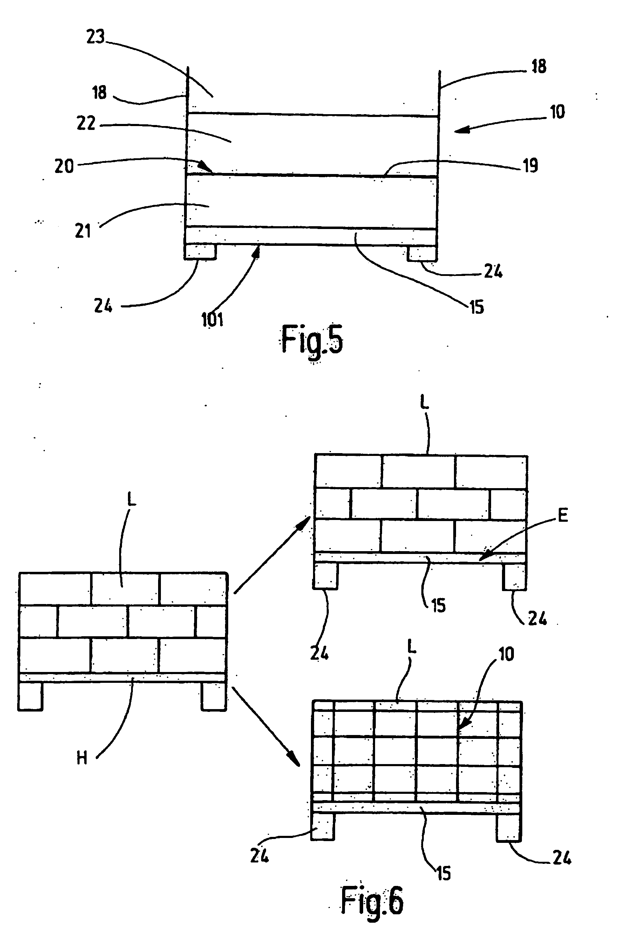

Vorzugsweise umfasst die Palettenlageranlage 100 einen nicht näher gezeigten Palettenwechsler zur Umladung von ankommender Ladung, die sich auf externen Paletten befindet, auf interne Paletten 101 der Palettenlageranlage 100. Das Umladeprinzip ist in Fig. 6 gezeigt. Da auf Holzpaletten gelieferte Lebensmittel nicht hygienischen Anforderungen genügt, ist es zweckmäßig, diese auf Edelstahlpaletten umzuladen. Daher ist vorgesehen, dass jede Trägerplatte 15 aus einem hygienischen Trägermaterial, wie Edelstahl oder einem geeigneten Kunststoff, ausgeführt ist. Der Palettenwechsel dient nicht nur dazu die Ladung auf Edelstahlpaletten umzuladen, sondern auch die Ladung auf Paletten 101 mit Gitterwänden 18 bzw. Gitterboxen 10 umzuladen.

Fig. 6 zeigt eine ankommende Holzpalette H. Die Ladung L kann dann auf eine Edelstahlpalette E oder auf eine Gitterbox G durch einen in an sich bekannter Weise ausgebildeten Palettenwechsler umgeladen werden.

Ebenfalls sind nicht näher gezeigte Schotts und/oder schließbare Türen zwischen Teilen der Anlage vorhanden, um im Brandfall oder Wassereinbruch einen Schutz zu bieten. Um zu verhindern, dass diese Türen nicht durch Paletten blockiert werden, ist ferner eine im Schottbereich vorhandene Sensoreinrichtung zur Detektion des Transportwagens 26, einer Palette 101 oder anderen im Türbereich liegenden Gegenständen vorhanden. Der Sensor kann eine Kamera, eine Lichtschranke oder dergleichen sein

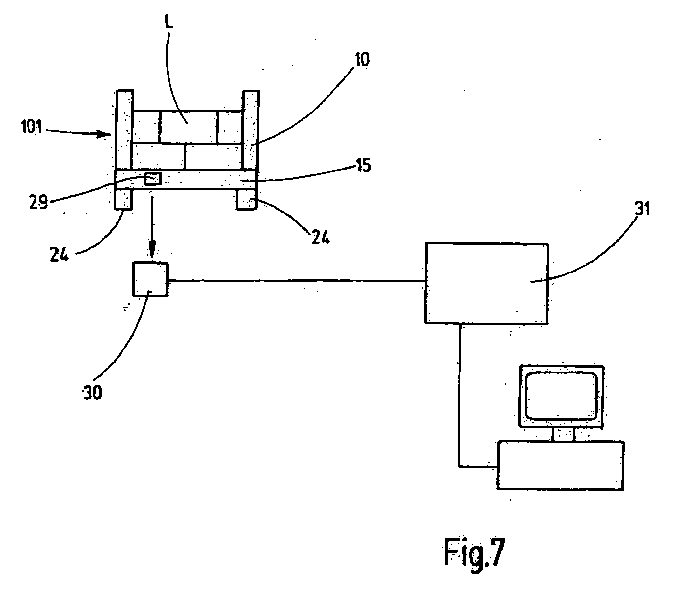

Vorgesehen ist auch ein automatisches System zur Erstellung einer Palettenpackliste. Fig. 7 zeigt ein Palettenerfassungssystem zur Detektion der Palette 10 mit einem Informationsverarbeitungssystem zur Erstellung der Palettenpackliste. Die Palette 10 ist mit einem RFID-Tag 29 versehen, der eine Information über die auf der Palette 10 vorhandenen Ladung L gespeichert hat. Mit einem Lesegerät 30 wird die Information beim Vorbeifahren einer Lesezone gelesen und einem Informationsverarbeitungssystem 31 übergeben, der die Palettenpackliste erstellt. Anstelle des RFID-Tags kann auch ein anderes Informationsträgermittel dienen, wie z.B. ein Bar-Code.

Die Palettenlageranlage 100 enthält eine Mehrzahl von Lagerräumen, die voneinander durch die Gitterwände der Gitterbox 10 bzw. mehrerer Gitterboxen abgetrennt sind. Die Lagerräume können zusätzlich zur Lagerhaltung unterschiedlicher Lagergüter dienen. Hierbei können auch zusätzliche Trennwände angeordnet sein. Die Lagerräume können Klimatisierungseinrichtungen aufweisen, die eine vorbestimmte Temperatur und/oder eine vorbestimmte Atmosphäre einstellen. Es können Räume mit Temperaturen von -20 bis -25° C für Gefriergut, +4° bis +10° C für Lebensmittel und/oder Getränke klimatisiert werden. Auch Räume mit einer anderen Atmosphäre, wie mit kontrolliertem Inertgas für feuer- oder korrosionsgefährdete Lagergüter, sind möglich.

Vorteilhaft ist eine Kommissionierungszone mit mehreren Kommissionierungsplätzen. Diese ist mit der Transporteinrichtung erreichbar. Die Transporteinrichtung 120 hat mehrere Zugangsbereiche zum Zuführen oder Entnehmen von Lagergütem.

Die Palettenlageranlage 100 kann in mehrere Lagerräume unterteilt sein, die durch zusätzliche Trennwände voneinander getrennt sind, wobei auch in diesem Fall die Trennwände von den Paletten 101 bzw. den Gitterboxen 10 gebildet sein können. Die Seitenwände der Paletten 101 können weitere Lagerreihen bzw. Lagerräume bilden, so dass dadurch weitere Trennwände des Lagers geschaffen werden.

Neben Kühlräumen mit verschiedenen Kühlzonen sind auch Trockenfrachträume und Lagerfrachträume denkbar. Klimatisierungseinrichtungen können N₂ oder CO₂-Generatoren aufweisen.

Neben dem Proviant kann die Palettenlageranlage auch Munition aufnehmen. Dazu werden doppelwandige mit Wasser gefüllte Wände bzw. Zwischenwände eingesetzt, die Detonationsenergie aufnehmen können. Die Gitterboxen 10 der Paletten 101 können dann ebenfalls in Übereinstimmung mit Sicherheitsvorschriften ausgebildet sein.

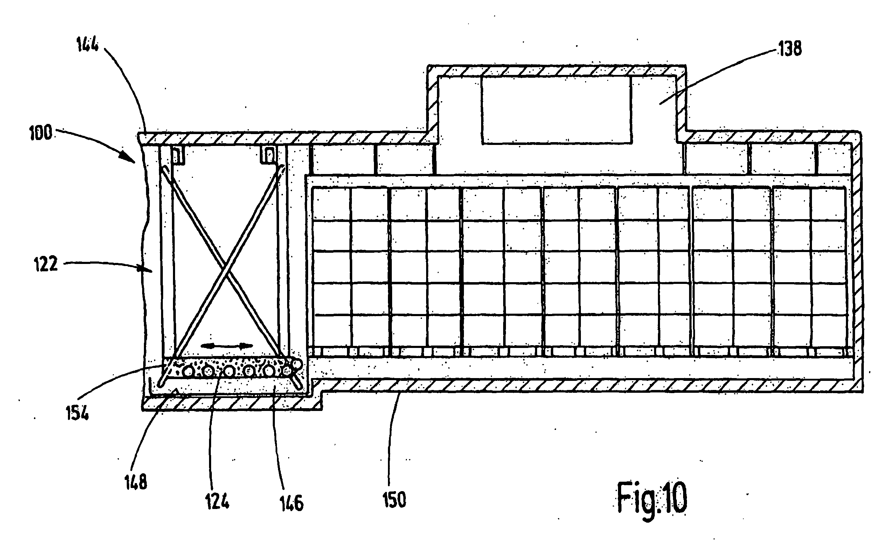

In der Fig. 8 ist eine perspektivische Gesamtansicht einer in einem Schiff eingebauten Palettenlageranlage 100 dargestellt. Die Palettenlageranlage 100 enthält eine Mehrzahl von Lagerräumen 100A bis 100H, die voneinander durch Trennwände 112 abgetrennt sind, die mit verschließbaren Türen versehen sind und die die Schotts 136 bilden. Die Lagerräume 100A bis 100H dienen der Lagerung unterschiedlicher Lagergüter. Zumindest einige der Lagerräume 100A bis 100H weisen daher unterhalb der in Fig. 8 nicht dargestellten Raumdecke Klimatisierungseinrichtungen (Fig. 9 und 10) auf, die eine vorbestimmte Temperatur und/oder eine vorbestimmte Atmosphäre in dem jeweiligen Lagerraum einstellen.

Beispielsweise können die Lagerräume 100A und 100B bei einer Temperatur von -25° C der Lagerung von Fisch bzw. Fleisch dienen, der Raum 100C bei einer Temperatur von -20° C der Lagerung von Geflügel und Gemüse, der Raum 100D bei einer Temperatur von +4° C der Lagerung von Milchprodukten und die Räume 100G und 100H bei einer Temperatur von +10° C der Lagerung von Getränken, wie Mineralwasser, Limonaden, Bier oder hochprozentigen alkoholischen Getränken. Im Raum 100E ist im Ausführungsbeispiel durch eine kontrollierte Inertgas-Atmosphäre ohne Sauerstoff ein Lagerbereich für feuer- oder korrosionsgefährdete Lagergüter geschaffen, der Raum 100F ist als Trockenfrachtraum vorgesehen.

Die Palettenlageranlage 100 weist weiter eine Kommissionierungszone 114 mit mehreren Kommissionierungsplätzen auf. Diese Kommissionierungszone ist mit einer nachfolgend genauer beschriebenen Transporteinrichtung erreichbar, die in verschiedene Zugangsbereiche 116 zum Zuführen oder Entnehmen von Lagergütern einfahrbar ist.

Der Ausschnitt der Fig. 9 zeigt den Grundaufbau der Palettenlageranlage 100 in Aufsicht. Dargestellt sind zwei Lagerräume 100J und 100K, die durch eine Trennwand 112 bzw. ein Schott 136 voneinander getrennt sind. Jeder Lagerraum 100J, 100K weist mehrere Lagerreihen 132 auf, die in ihrer Breite jeweils eine Palette 101 aufnehmen. Die Trennwände zur Ausbildung mehrere Lagerräume werden von den als Gitterboxen 10 ausgebildeten Paletten 101 gebildet.

In einem die Lagerräume durchziehenden Lagergang 130 ist eine fahrbare Transporteinrichtung 120 angebracht, die als Transporteinrichtung 120 einen Längstransportwagen 122 und einen auf diesem angeordneten Quertransportwagen 124 aufweist. Der Längstransportwagen 122 ist, wie durch die Pfeile 126 angezeigt, entlang des Lagergangs 130 verfahrbar, und der Quertransportwagen 124 ist vom Längstransportwagen 122 aus in Richtung der Pfeile 128 in die einzelnen Lagerreihen 132 verfahrbar.

Wie weiter unten erläutert, ist zur atmosphärischen Trennung der unterschiedlich klimatisierten Lagerräume 100J und 100K im Bereich des Lagergangs 30 ein Schott 136 vorgesehen.

Die Funktionsweise der Transporteinrichtung 120 wird nun mit Bezugnahme auf die Fig. 10 näher erläutert. Fig. 10 zeigt eine Vorderansicht der Palettenlageranlage der Fig. 9, gesehen aus der Richtung X-X. Der Längstransportwagen 122 ist in Laufschiene 25 geführt. Eine Transportplattform 146 des Längstransportwagens 122 liegt in einer Vertiefung 148 des Raumbodens 150, so dass der aufgesattelte Quertransportwagen 124 von der Transportplattform 146 mittels Laufschienen auf Rollen 154 in die einzelnen Lagerreihen 132 verfahren werden kann.

Der Quertransportwagen 124 ist über nicht dargestellte aufwickelbare Versorgungsleitungen, wie Stromkabel, Steuerkabel und dergleichen, beim Ein- und Ausfahren in die Lagerreihen 132 stets mit dem Längstransportwagen 122 verbunden. Die Breite jeder Lagerreihe 132 entspricht dabei der Breite des Quertransportwagens. Sie ist darüber hinaus so groß gewählt, dass die Lagerreihen 132 auch begehbar und mit Flurförderfahrzeugen befahrbar sind, um einen Notzugang sicherzustellen, falls die automatische Versorgung mit der Transporteinrichtung 120 ausfallen sollte.

Wird ein Lagergut, beispielsweise Proviant, aus einem Lagerraum benötigt, wird die entsprechende Palette mit der Ladung Proviant von der Transporteinrichtung 120 in die Kommissionierungszone 114 gebracht und dort mit dem Quertransportwagen 124 in einen der Zugangsbereiche gefahren. In dem Zugangsbereich wird von Hand die benötigte Proviantmenge der Ladung auf der Transporteinrichtung entnommen und zur Verarbeitung gebracht. Anschließend wird der Quertransportwagen 124 mit der verbleibenden Ladung gewogen und das bekannte Gewicht des Quertransportwagens 124 vom Gesamtgewicht abgezogen. Das als Ergebnis erhaltene Gewicht der Restladung wird von einer Steuer- und Überwachungseinheit 170 gespeichert (Fig. 8). Dadurch kann die jeweilige Proviantmenge kontrolliert werden, um etwa neuen Proviant zu ordern, wenn die Proviantmenge eines bestimmten Nahrungsmittels zur Neige geht. Entsprechend werden auch die Zugänge an Lagergütern von der Steuer- und Überwachungseinheit 170 erfasst und gespeichert.

Im Ausführungsbeispiel kann jedes Lagergut unter Berücksichtigung der klimatischen Anforderungen an einem beliebigen Lagerplatz abgelegt werden, da die Steuer- und Überwachungseinheit 170 den Lagerplatz für jedes Lagergut speichert. So können beispielsweise Mineralwasser, Limonaden und Bier in einer Lagerreihe in einer Palette übereinander gestapelt sein. Soll dann etwa Limonade abgeholt werden, wird der andere Teil der Ladung in einem freien Raum abgestellt und die Limonadenladung wird in die Kommissionierungszone gebracht, wo die gewünschte Menge entnommen wird. Anschließend wird die Restladung der Limonade zusammen mit den anderen Ladungsteilen wieder an den Lagerplatz gebracht.

Die Steuer- und Überwachungseinheit 170 überprüft auch teilverbrauchte Ladeeinheiten und staut Lagergüter, die aufgrund ihrer Beschaffenheit zusammengefasst werden können, soweit möglich zusammen. Dies kann automatisch geschehen oder die Steuer- und Überwachungseinheit 170 kann dem Bediener vorschlagen, welche teilverbrauchten Ladeeinheiten zusammengefasst werden können.

Die Steuer- und Überwachungseinheit 170 erfasst weiter die Haltbarkeitsdaten verderblicher Produkte, wie Milch oder Wurst. Bei Annäherung oder Überschreiten des Haltbarkeitsdatums wird dann eine Warnmeldung für den Lagerverwalter erzeugt.

Im Ausführungsbeispiel wird durch die Steuer- und Überwachungseinheit 170 auch die Zugriffshäufigkeit auf bestimmte Lagergüter erfasst und gespeichert. Die am häufigsten verwendeten Güter werden möglichst nahe an der Kommissionierungszone 114 gelagert, wodurch ein schneller Zugriff auf diese Güter sichergestellt wird. Selten gebrauchte Güter werden dagegen in abgelegeneren Lagerreihen gelagert.

Die Steuer- und Überwachungseinheit 170 übernimmt auch die Überwachung der Temperatur und gegebenenfalls der Gaszusammensetzung, der klimatisierten Lagerräume, beispielsweise des Sauerstoff- oder Kohlendioxidgehalts. Dazu sind in den Lagerräumen entsprechende mit der Steuer- und Überwachungseinheit 170 verbundene Messeinrichtungen vorgesehen.

Neben Kühlräumen mit verschiedenen Kühlzonen bis hin zu tiefkalten Kühlräumen sind auch Trockenfrachträume und Lagerräume mit Inertgas-Atmosphäre vorgesehen. Die Haltbarkeit von Früchten und Gemüse kann durch den Einsatz inerter Gase wesentlich erhöht werden. Die Klimatisierungseinrichtungen weisen dabei N₂- bzw. CO₂-Generatoren, gegebenenfalls auch eine O₂-Zufuhr zur Versorgung der Lagerräume auf.

Die Lagerreihen 132 können zum Lagergang 130 hin mittels Türen verschlossen sein. Im Bereich des Lagergangs wird durch seitliche Schiebetüren eine Schleuse ausgebildet. Die Transporteinrichtung 120 fährt in diese Schleuse ein und die Schiebetüren werden geschlossen, so dass gekühlte Luft aus der Lagerreihe nur in die Schleuse, aber nicht in den gesamten Lagergang 130 und in Lagerreihen mit anderen klimatischen Bedingungen gelangt.

Die Steuer- und Überwachungseinheit 170 ist im Ausführungsbeispiel durch einen Rechner mit entsprechender Software und Peripheriegeräten zur Steuerung der externen Geräte gebildet.

Jede Palette kann boxenartig mit einer Trägerplatte und mit Seitenwänden ausgebildet sein, wobei die Trägerplatte mit in den Trägerplatteneckbereichen angeordneten Standfüßen versehen ist.

Die an den schiffsinternen Paletten befestigten Seitenwände verhindern, dass die Ladungen auf den Paletten verrutschen und herunterfallen können. Die an den Trägerplatten der Paletten angeordneten Standfüße verhindern beim Verfahren der Paletten ein Abkippen der Paletten mit der gesamten Ladung. Sind die Seitenwände der Palette bzw. die Seitenwände der Gitterbox gitterförmig ausgebildet und somit luftdurchlässig, besteht die Möglichkeit, bei einer entsprechenden Klimatisierung der Laderäume eine Haltbarkeit des Ladegutes über einen längeren Zeitraum zu erreichen.

Während bei der Lösung nach der EP 1 406 051 sich die Ladung an den festen Wänden an dem Lagerraum abstützt, und daher die Paletten bei dieser Lösung eine feste, geordnete Position haben muss, um ein Herunterfallen der Ladung zu verhindern, ist es durch die als Stützwände wirkenden Seitenwände der hier beschriebenen Paletten möglich, die Palette beliebig anzuordnen, da sich die Ladung oder der Proviant an den Wänden der Palette abstützen kann und so gesichert ist.

Hintereinander oder nebeneinander angeordnete Paletten bilden zusammen eine Seitenwand, so dass diese Wände die festen Seitenwände des Laderaumes ersetzen können bzw. Trennwände des Laderaumes bilden, wobei die Anordnung von Gitterwänden an den Trägerplatten der Paletten eine Klimatisierung der Laderäume, in denen die Paletten bzw. Gitterböxen mit ihren Ladungen gelagert sind, ermöglicht, so dass das Lagergut bei den jeweils erforderlichen Temperaturen gelagert werden kann.

Die Seitenwände der Paletten sind als Gitterwände ausgeführt. Dadurch entsteht eine Gitterbox. Dies hat den Vorteil, dass die Ladung einerseits sicher befestigt ist, da die Gitterkonstruktion hierfür optimal ist, weil sich Kartons gut an dem Gitter abstützen können, andererseits kann die Ladung leicht eingesehen werden, um die Kartons mit Proviant oder ähnliches leicht identifizieren zu können. Die so geschaffene Konstruktion ergibt eine Gitterbox, die außerdem ein geringes Gewicht aufweist. Auf der Grundkonstruktion befinden sich die Gitterwände. Es können 2, 3 oder 4 Gitterwände vorhanden sein. Die Wände sind fest mit der Grundkonstruktion verbunden. Es sind aber auch loslösbare oder klappbare Wände denkbar.

Zur Ausbildung der Gitterbox sind die Seitenwände der Palette vollwandig oder als Gitterwände ausgeführt, die an der Trägerplatte fest oder lösbar angeordnet sind.

Die an der Trägerplatte angeordnete Anzahl der Gitterwände kann beliebig sein. Alternativ ist es auch möglich, wenn die Gitterbox zwei oder drei Seitenwände aufweist. Durch die fehlende bzw. die fehlenden Seitenwände kann die Ladung ebenfalls ein- und ausgeladen werden. Eine andere Lösung ist es, wenn ein oder mehrere Seitenwände loslösbar mit der Trägerplatte verbunden sind. Die abnehmbare Seitenwand bzw. Seitenwände schaffen ebenfalls eine Lade- bzw. Entladeseite. Ist eine Seitenwand oder mehrere Seitenwände türartig ausgebildet, so kann die Ladung ein- und ausgeladen werden, wobei die geschlossene Gitterbox die Ladung optional sichert.

Die obenseitig offen ausgebildete Gitterbox ist mittels eines Deckelteils verschließbar, das vollwandig oder als Gitterwand ausgebildet ist und lösbar mit den Seitenwänden oder den Gitterwänden verbunden, so dass das Be- und Entladen der Gitterbox auch von oben erfolgen kann. Vorteilhafterweise sind die Seitenwände und/oder die Gitterwände fest oder lösbar miteinander verbunden, so dass bei abgenommenen Seitenwänden auch das Stapeln des Ladegutes direkt auf der Trägerplatte möglich ist.

Möglich ist, dass zwischen den Seitenwänden oder den Gitterwänden Querstrebungen oder Regalböden oder vollflächige oder gitterförmige Regalböden zur Ausbildung von Regalen mit einem Fach oder mehreren Fächern angeordnet sind. Der dadurch erreichte, besondere Vorteil besteht darin, dass durch die zwischen den Seitenwänden angeordneten Querverstrebungen die Steifigkeit der Konstruktion erhöht wird. Die Verstrebungen der Wände sind vorzugsweise waagerecht angeordnet, wobei insbesondere Regale als Querverstrebungen vorhanden sind, so dass Böden oder Kästen ähnlich wie bei einem Regal eingehängt werden können. Die Gitterbox kann auch ähnlich einem Schrank oder einer Kommode ausgeführt sein.

Möglich ist auch, dass die Trägerplatten mit vier Standfüßen anstelle von Kufen versehen sind. Der Raum unter der Grundkonstruktion und zwischen den Standfüßen kann für den automatischen Transport genutzt werden. Dadurch kann die Raumhöhe besser genutzt werden. Ein automatisches Transportfahrzeug bewegt die Gitterbox, wobei diese die Gitterbox anhebt und in einen Gang einfährt, der durch eine Laufschiene oder ähnliches begrenzt wird. Die Standfüße hängen dabei außerhalb der Laufschiene. Die Laufschiene dient als Fahrschiene für den Transportwagen und gleichzeitig als Führung und Ladungssicherung für die Transporteinheit. Die Laufschienen sind eine Leiteinrichtung für die Transportwagen bzw. Flurförderer und dienen als Sicherung für den Ladungsträger bzw. für die Gitterbox zugleich. Die Laufschiene kann als L-, U- oder als Hutprofil ausgebildet sein, die die Kombination einer Fahrschiene und einer Ladungssicherung übernimmt. Die Laufschiene lässt sich zur Montage justieren, was idealerweise auch noch für Nachstellarbeiten genutzt werden kann. Die Laufschiene hält gleichzeitig die Palette, wenn das Transportfahrzeug die Palette abgesetzt hat. Die Gitterbox kann dabei mit der Trägerplatte und/oder den Standfüßen auf der Laufschiene aufliegen. Ferner kann die Laufschiene mit Stoppelementen oder Positionselementen versehen sein, die sich auf der Laufschiene oder an einer Seite befinden. Diese Elemente befinden sich dann zwischen den Paletten, so dass die abgesenkten Gitterboxen nicht verrutschen können. Die Positionselemente können keilförmig oder konisch geformt sein, derart dass die Gitterbox in eine Idealposition gleiten kann. Durch die Unterteilung in Lager- und Bearbeitungs- bzw. Hantierungsbereiche können unterschiedliche Regeln für diese Bereiche ausgenutzt werden. Diese Form der Lagerhaltung entspricht den gängigen Hygienevorschriften. Die Länge der Standfüße ist dabei so bemessen, dass einerseits die Paletten von Gabelstaplern oder anderweitigen Hubfahrzeugen ergriffen werden können und andererseits die Laufschienen seitlich umgriffen werden können, so dass Laufschienen und die Gitterboxen stabile Einheiten bilden.

Die Fördereinrichtung für die Paletten der Palettenlageranlage kann zum Beispiel auch als Rollen- oder Kettenförderer ausgeführt sein. Die Laufschienen für die Transportwagen sind auf dem Boden montiert und insbesondere so angeordnet, dass sie begehbar bzw. mit Flurförderfahrzeugen befahrbar sind. Dies wird hauptsächlich durch einen ausreichenden Abstand zwischen den Laufschienen gewährleistet. Vorzugsweise ist die Anlage so ausgeführt, dass eine Palettenbewegung auch ohne die automatische Fördertechnik möglich ist. Des Weiteren ist die Ausführung so, dass Transportwagen und die übrige Fördertechnik auch ohne eine zentrale Steuerung bedient werden kann. Dieses ist vorteilhaft, damit bei Ausfall der Steuerung das Lager weiterhin bedient werden kann. Die Anlage kann auch so ausgeführt sein, dass das Lager manuell mit oder ohne Flurförderfahrzeuge bedienbar ist.

Sehr günstig ist es, wenn ein Palettenwechsler in der Palettenlageranlage vorhanden ist, der die Ladung, die sich auf externe Paletten befindet, auf interne Schiffspaletten umlädt. Hierbei wird insbesondere jede Trägerplatte aus einem hygienischen Trägermaterial, wie Edelstahl oder einem geeignetem Kunststoff, ausgeführt, wobei die Palettenlageranlage vorzugsweise mit einem Palettenwechsler ausgestattet ist, um ankommende Ladung auf Holzpaletten in die mit dem hygienischem Trägermaterial versehenem Trägerplatten umzuladen. Proviant wird nämlich überwiegend in Holzpaletten ausgeliefert. Mit einem Palettenwechsel bekannter Weise kann die Ladung von den Holzpaletten auf Edelstahlpaletten umgeladen werden. Dieser Vorgang kann automatisch oder teilautomatisch erfolgen. Dieser Vorgang kann auch in ein automatisiertes Lager im Schiff integriert werden oder unabhängig davon durchgeführt werden. Vorzugsweise soll die Umladung durch Schieben der Ladung auf eine Edelstahlunterlage erfolgen.

### Bezugszeichenliste

- 100: Palettenlageranlage
- 101: Palette
- 100A-100K: Lagerräume

- 10: Gitterbox
- 15: Trägerplatte
- 17: Seitenwände
- 18: Gitterwand
- 18': Gitterwand
- 18a: Deckelteil
- 19: Querverstrebungen

- 20: Regale
- 21: Fach
- 22: Fach
- 23: Fach
- 24: Standfüße
- 25: Laufschienen
- 26: Transportwagen
- 27: Laufrollen
- 28: Tragkörper
- 29: RFID-Tag

- 30: Lesegerät
- 31: Informationssystem

- 112: Wand
- 114: Kommissionierungszone

- 120: Transporteinrichtung

- 122: Längstransportwagen
- 124: Quertransportwagen
- 126: Bewegungsrichtung Längstransportwagen
- 128: Bewegungsrichtung Quertransportwagen

- 130: Lagergang
- 132: Lagerreihen
- 136: Schott
- 138: Klimatisierungseinrichtung

- 144: Raumdecke
- 146: Transportplattform
- 148: Vertiefung

- 150: Raumboden
- 154: Rollen

- 170: Steuer- und Überwachungseinheit

- H: Holzpalette
- E: Edelstahl palette
- L: Ladung

## Patentansprüche

1. Palettenlageranlage (100) zur Lagerhaltung von Lagergütern, nämlich Nahrungs- und Genussmittel sowie Hotelbedarf und Ersatzteile, für den Einsatz in einem Kreuzfahrtschiff, die beiderseits eines Lagergangs (130) angeordnete Lagerreihen (132), eine in dem Lagergang verfahrbare Transporteinrichtung (120) zum Ein- und Auslagern von Paletten (101) mit einer Trägerplatte (15) in die Lagerreihen (132) umfasst, wobei die beiderseits des Lagergangs (130) angeordneten Lagerreihen (132) mehrere durch Wände (112) getrennte Lagerräume bilden,
**dadurch gekennzeichnet,**
**dass** jede Palette (101) boxenartig (10) mit einer Trägerplatte (15) und mit Seitenwänden (17) ausgebildet ist, wobei die Trägerplatte (15) mit in den Trägerplatteneckbereichen angeordneten Standfüßen (24) versehen ist, dass die Seitenwände (17) der Palette (101) zur Ausbildung einer Gitterbox (10) mit Durchbrechungen versehen oder als Gitterwände (18) ausgeführt sind, die an der Trägerplatte (15) fest, lösbar oder abklappbar angeordnet sind, dass eine oder mehrere Seitenwände (17) oder Gitterwände (18) türartig ausgebildet sind oder Türen aufweisen, dass jede Trägerplatte (15) jeweils mit vier Standfüßen (24) versehen ist, die zur Sicherung der Paletten (101) oder der Gitterboxen (10) gegen seitliches Abkippen so angeordnet sind, dass sie Laufschienen (25) der Transporteinrichtung (120) seitlich übergreifen, dass jede Trägerplatte (15) mit ihren Seitenwänden (17) oder Gitterwänden (18) aus einem hygienischen Material, wie Edelstahl oder einem geeigneten Kunststoff, ausgeführt ist, wobei die Palettenlageranlage (100) mit einem Palettenwechsler ausgestattet ist, um ankommende Ladung auf Holzpaletten (H) automatisch oder teilautomatisch in die aus hygienischem Material bestehenden Trägerplatten (15) umzuladen.

2. Palettenlageranlage nach Anspruch 1,
**dadurch gekennzeichnet,**
**dass** an der Trägerplatte (15) eine Gitterwand oder zwei, drei oder vier Gitterwände (18) angeordnet sind.

3. Palettenlageranlage nach Anspruch 1,
**dadurch gekennzeichnet,**
**dass** an der Trägerplatte (15) zwei Gitterwände (18) angeordnet sind, die sich gegenüberliegend sind.

4. Palettenlageranlage nach Anspruch 1,
**dadurch gekennzeichnet,**
**dass** die obenseitig offen ausgebildete Gitterbox (10) mittels eines Deckelteils (18a) verschließbar ist, das vollwandig oder als Gitterwand ausgebildet ist und das lösbar mit den Seitenwänden (17) oder den Gitterwänden (18) verbunden ist.

5. Palettenlageranlage nach einem der vorhergehenden Ansprüche 1 bis 4,
**dadurch gekennzeichnet,**
**dass** die Seitenwände (17) und/oder die Gitterwände (18) fest oder lösbar miteinander verbunden sind.

6. Palettenlageranlage nach einem der vorhergehenden Ansprüche 1 bis 5,
**dadurch gekennzeichnet,**
**dass** zwischen den Seitenwänden (17) oder den Gitterwänden (18) Querverstrebungen (19) oder Regalböden oder vollflächige oder gitterförmige Regalböden zur Ausbildung von Regalen (20) mit einem Fach oder mehreren Fächern (21, 22, 23) angeordnet sind.

7. Palettenlageranlage nach Anspruch 6,
**dadurch gekennzeichnet,**
**dass** die Regale (20) loslösbar mit den Seitenwänden (17) befestigt sind, vorzugsweise einhängbar ausgebildet sind.

8. Palettenlageranlage nach einem der vorhergehenden Ansprüche 1 bis 7, **gekennzeichnet durch** ein automatisches System zur Erstellung einer Palettenpackliste mit einem Palettenerfassungssystem zur Detektion der Paletten (101) und einem Informationsverarbeitungssystem (31) zur Erstellung der Palettenpackliste.

9. Palettenlageranlage nach Anspruch 8,
**dadurch gekennzeichnet,**
**dass** die Paletten (101) mit einem Informationsträgermittel ausgestattet sind.

10. Palettenlageranlage nach Anspruch 9,
**dadurch gekennzeichnet,**
**dass** das Informationsträgermittel ein RFID-Tag (29), ein Bar-Code oder ein Chip ist.

11. Palettenlageranlage nach einem der vorhergehenden Ansprüche 1 bis 10,
**dadurch gekennzeichnet,**
**dass** die Transporteinrichtung (120) aus einem von Hand oder motorisch verfahrbaren Transportwagen (14) oder aus einem in dem Lagergang (130) der Palettenlageranlage (100) verfahrbaren Längstransportwagen (122) und einem in die Lagerreihen (132) verfahrbaren Quertransportwagen (124) besteht.

## Claims

1. A pallet storage facility (100) for storing storage goods, namely foodstuffs and semi-luxury food as well as hotel supplies and spare parts for use in a cruise ship, which comprises storage rows (132) disposed on both sides of a storage aisle (130), a transport device (120) which can be moved in the storage aisle for putting in and taking out pallets (101) by means of a carrier plate (15) into the storage rows (132), wherein the storage rows (132) arranged on both sides of the storage aisle (130) form a plurality of storage spaces separated by walls (112),
**characterised in that**
each pallet (101) is configured in a box-like manner (10) having a carrier plate (15) and having side walls (17), wherein the carrier plate (15) is provided with feet (24) located in the corner regions of the carrier plate, that the side walls (17) of the pallet (101) are provided with openings to form a lattice box (10) or are designed as lattice walls (18), which are located fixedly, detachably or foldably on the carrier plate (15), that one or a plurality of side walls (17) or lattice walls (18) are configured in the manner of a door or comprise doors, that each carrier plate (15) is provided with four feet (24), which are arranged for securing the pallets (101) or the lattice boxes (10) against lateral tilting such that they laterally overlap running rails (25) of the transport device (120), that each carrier plate (15) is designed with its side walls (17) or lattice walls (18) made of a hygienic material such as stainless steel or a suitable plastic, wherein the pallet storage facility (100) is provided with a pallet changer in order to transfer incoming loads on wooden pallets (H) automatically or semi-automatically into the carrier plates (15) consisting of hygienic material.

2. The pallet storage facility according to claim 1,
**characterised in that**
one lattice wall or two, three or four lattice walls (18) are arranged on the carrier plate (15).

3. The pallet storage facility according to claim 1,
**characterised in that**
two lattice walls (18) which are located opposite one another are arranged on the carrier plate (15).

4. The pallet storage facility according to claim 1,
**characterised in that**
the lattice box (19) which is configured to be open at the top can be closed by means of a cover part (18a), which is configured as a solid wall or as a lattice wall and which is detachably connected to the side walls (17) or the lattice walls (18).

5. The pallet storage facility according to any one of claims 1 to 4,
**characterised in that**
the side walls (17) and/or the lattice walls (18) are connected fixedly or detachably to one another.

6. The pallet storage facility according to any one of claims 1 to 5,
**characterised in that**
transverse struts (19) or shelf bases or solid or lattice-like shelf bases for forming shelves (20) having one compartment or a plurality of compartments (21, 22, 23) are arranged between the side walls (17) or the lattice walls (18).

7. The pallet storage facility according to claim 6,
**characterised in that**
the shelves (20) are attached detachably to the side walls (17), preferably the shelves (20) are configured to be mountable.

8. The pallet storage facility according to any one of claims 1 to 7,
**characterised by** an automatic system for creating a pallet packing list comprising a pallet detection system for detecting the pallets (101) and an information processing system (31) for creating the pallet packing list.

9. The pallet storage facility according to claim 8,
**characterised in that**
the pallets (101) are equipped with information carrier means.

10. The pallet storage facility according to claim 9,
**characterised in that**
the information carrier means is an RFID tag (29), a bar code or a chip.

11. The pallet storage facility according to any one of claims 1 to 10,
**characterised in that**
the transport device (120) consists of a transport trolley (14) which can be moved by hand or by motor or of a longitudinal transport trolley (122) which can be moved in the storage aisle (130) of the pallet storage facility (100) and a transverse transport trolley (124) which can be moved in the storage rows (132).

## Revendications

1. Installation de stockage de palettes (100) destinée à l'entreposage de marchandises de stockage, à savoir de produits alimentaires et de produits d'agrément, ainsi que de produits pour l'hôtellerie et de pièces détachées, pour l'utilisation dans un bateau de croisière, qui comprend des rangées de stockage (132) disposées des deux côtés d'une voie de stockage (130), un dispositif de transport (120) déplaçable dans la voie de stockage, pour entrer en stock et sortir du stock des palettes (101), avec un plateau support (15) dans les rangées de stockage (132), les rangées de stockage (132) disposées des deux côtés de la voie de stockage (130) formant plusieurs espaces de stockages séparés par des parois (112), **caractérisée en ce que**
chaque palette (101) est conçue à la manière d'un conteneur (10) avec un plateau support (15) et avec des parois latérales (17, le plateau support (15) étant muni de pieds (24) disposés dans les zones angulaires des plateaux supports, **en ce que** pour former un conteneur grillagé (10), les parois latérales (17) de la palette (101) sont munies de jours ou sont conçues à la manière de parois grillagées (18) qui sont disposées solidement, de façon amovible ou rabattable sur le plateau support (15), **en ce qu'**une ou plusieurs parois latérales (17) ou parois grillagées (18) sont conçues à la manière de portes ou comportent des portes, **en ce que** chaque plateau support (15) est chaque fois muni de quatre pieds (24) qui pour bloquer les palettes (101) ou les conteneurs grillagés (10) contre un basculement latéral sont disposés de sorte à chevaucher latéralement des rails de roulement (25) du dispositif de transport (120), **en ce que** sur ses parois latérales (17) ou parois grillagées (18), chaque plateau support (15) est réalisé dans une matière hygiénique, comme de l'acier inoxydable ou une matière plastique adaptée, l'installation de stockage de palettes (100) étant équipée d'un changeur de palettes, pour transborder un chargement arrivant sur des palettes en bois (H) de manière automatique ou semi-automatique dans les plateaux supports (15) constitués d'une matière hygiénique.

2. Installation de stockage de palettes selon la revendication 1,
**caractérisée en ce que**
sur le plateau support (15) est disposée une paroi grillagée ou sont disposées deux, trois ou quatre parois grillagées (18).

3. Installation de stockage de palettes selon la revendication 1,
**caractérisée en ce que**
sur le plateau support (15) sont disposées deux parois grillagées (18) qui sont mutuellement opposées.

4. Installation de stockage de palettes selon la revendication 1,
**caractérisée en ce que**
le conteneur grillagé (10) qui est conçu avec la face supérieure ouverte peut se fermer avec un élément formant couvercle (18a), qui est conçu à paroi pleine ou en tant que paroi grillagée et qui est relié de manière amovible avec les parois latérales (17) ou les parois grillagées (18).

5. Installation de stockage de palettes selon l'une quelconque des revendications 1 à 4,
**caractérisée en ce que**
les parois latérales (17) et/ou les parois grillagées (18) sont reliées ensemble de façon fixe ou amovible.

6. Installation de stockage de palettes selon l'une quelconque des revendications 1 à 5,
**caractérisée en ce qu'**entre
les parois latérales (17) ou les parois grillagées (18) sont disposés des entretoises transversales (19) ou des fonds de rayonnages ou des fonds de rayonnages à surface pleine ou grillagée pour créer des rayonnages (20) à un ou à plusieurs compartiments (21, 22, 23).

7. Installation de stockage de palettes selon la revendication 6,
**caractérisée en ce que**
les rayonnages (20) sont fixés de manière amovible sur les parois latérales (17), sont conçus de préférence de façon à pouvoir être accrochés.

8. Installation de stockage de palettes selon l'une quelconque des revendications 1 à 7, **caractérisée par** un système automatique pour établir une liste de colis sur palettes avec un système s'engageant sous les palettes pour la détection des palettes (101) et un système de traitement de données (31) pour établir la liste de colis sur palettes.

9. Installation de stockage de palettes selon la revendication 8,
**caractérisée en ce que**
les palettes (101) sont équipées d'un moyen support informatique.

10. Installation de stockage de palettes selon la revendication 9,
**caractérisée en ce que**
le moyen de support informatique est une radio-étiquette (RFID), un code-barres ou une puce.

11. Installation de stockage de palettes selon l'une quelconque des revendications 1 à 10,
**caractérisée en ce que**
le dispositif de transport (120) est constitué d'un chariot de transport (14) déplaçable manuellement ou par moteur, d'un chariot de transport longitudinal (122) déplaçable dans la voie de stockage (130) de l'installation de stockage de palettes (100) et d'un chariot de transport transversal (124) déplaçable dans les rangées de stockage (132).
